# EUROPÄISCHE PATENTSCHRIFT

(11) **EP 3 243 386 B1**
(45) Veröffentlichungstag und Bekanntmachung des Hinweises auf die Patenterteilung: **02.12.2020**
(21) Anmeldenummer: 16206201.2
(22) Anmeldetag: 22.12.2016
(51) Int. Cl.: A01N 59/00

(54) **BEKÄMPFUNG EINES VITALEN HAUSSCHWAMMBEFALLS IN EINEM MAUERWERK**
CONTROLLING VITAL DRY ROT IN A MASONRY WALL
LUTTE CONTRE L'ATTAQUE DE MÉRULE DANS LES MURS

(30) Priorität: 12.05.2016 LU 93068
(43) Veröffentlichungstag der Anmeldung: 15.11.2017
(73) Patentinhaber: Wießner, Joachim, 49688 Lastrup (DE)
(72) Erfinder: Wießner, Joachim, 49688 Lastrup (DE)
(74) Vertreter: Hoffmann, Jürgen

(56) Entgegenhaltungen:
- CN-A- 101 649 132
- DE-A1- 10 042 196
- DE-A1-102013 015 067
- JP-A- 2014 111 591
- US-A- 4 810 300
- Kreidezeit Naturfarben Gmbh: "Lithiumwasserglas", , 11. Juli 2012 (2012-07-11), XP055284946, Gefunden im Internet: URL:www.kreidezeit.de [gefunden am 2016-06-30]
- Nasko Terziev: "Von einer akkreditierten Prüfstelle ausgestellter PRÜFBERICHT", , 22. Dezember 2011 (2011-12-22), XP055284935, Gefunden im Internet: URL:http://www.haresil-holzschutz.de/ [gefunden am 2016-06-30]
- HEGARTY BRYAN ET AL: "DRY ROT STILL A PROBLEM", MATERIAL UND ORGANISMEN, DUNCKER UND HUMBLOT, BERLIN, DE, Bd. 21, Nr. 2, 1. Januar 1986 (1986-01-01) , Seiten 87-100, XP008089952, ISSN: 0025-5270
- DOBSON J ET AL: "The effectiveness of 2-aminoisobutyric acid as a translocatable fungistatic agent for the remedial treatment of dry rot caused by Serpula lacrymans in buildings", INTERNATIONAL BIODETERIORATION AND BIODEGRADATION, ELSEVIER LTD, GB, Bd. 31, Nr. 2, 1. Januar 1993 (1993-01-01) , Seiten 129-141, XP023923220, ISSN: 0964-8305, DOI: 10.1016/0964-8305(93)90069-E [gefunden am 1993-01-01]
- Olof Peterson: "Physical and chemical principles in alkali silica reactions", Report TVBM; Vol. 3016, 1 January 1983 (1983-01-01), pages 1-36, XP55643434, Sweden Retrieved from the Internet: URL:https://lup.lub.lu.se/search/ws/files/ 4519305/1856986.pdf [retrieved on 2019-11-18]
- [s.N.]: "Gegen den Hausschwamm", , 1 January 1885 (1885-01-01), XP55643567, DOI: 10.5169/seals-577709 Retrieved from the Internet: URL:https://www.e-periodica.ch/cntmng?pid= ihz-001:1885:1::964
- .: "31402 Lithiumwasserglas", , 19 August 2015 (2015-08-19), pages 1-2, XP55643754, Germany Retrieved from the Internet: URL:https://www.kremer-pigmente.com/media/ pdf/31402.pdf [retrieved on 2019-11-19]

## Beschreibung

Die Erfindung betrifft die Verwendung eines Stoffgemischs zur Bekämpfung eines vitalen Hausschwammbefalls in einem Mauerwerk.

Der echte Hausschwamm ist ein gefürchteter Schädling, der Holz in Gebäuden zerstört. Es handelt sich um einen Pilz, der bevorzugt verbautes Holz befällt und der ein feuchtes Milieu benötigt. Die benötigte Feuchtigkeit kann der Pilz insbesondere auch aus feuchten Mauerwerken ableiten. Der echte Hausschwamm hat die besondere Fähigkeit, anorganisches Material über- oder durchwachsen zu können. Insbesondere können die Myzelien des Pilzes Mauerwerk und Putz durchdringen, weswegen der echte Hausschwamm gelegentlich auch als "Mauerschwamm" bezeichnet wird.

Nach den derzeit allgemein anerkannten Regeln der Bautechnik, wird bei einer Hausschwammbekämpfung zuerst die Feuchteursache gesucht und beseitigt. Dann wird der Putz von der Wand entfernt. Danach wird die Wandoberfläche mit einem Brenner abgeflammt. In einem nächsten Schritt wird eine Vielzahl von Bohrlöchern in die Wand gebohrt und diese mit einem Schwammsperrmittel verfüllt. Nachdem die Oberfläche des Mauerwerks mit einem Schwammsperrmittel besprüht wurde, wird das Mauerwerk getrocknet. Nach dem Trocknen kann die Wand wieder verputzt werden. Diese übliche und anerkannte Vorgehensweise hat mehrere Nachteile.

Insbesondere ist das Einbringen von tiefen Bohrlöchern in einer großen Zahl problematisch, weil es durch das Rütteln beim Bohren zum Abplatzen von Steinen kommt, sich Steine lösen können oder das gesamte Mauerwerk beim Anbohren durch das Rütteln insgesamt zerstört wird. Daher ist das übliche Verfahren zur Bekämpfung von Hausschwamm in der Baudenkmalpflege nur bedingt und in vielen Fällen gar nicht anwendbar. Darüber hinaus gibt es Typen von Mauerwerken, bei denen eine Hausschwammbekämpfung im Bohrlochtränkverfahren nicht möglich ist. Hierzu gehören insbesondere Bruchsteinwände und Natursteinwände mit größeren Dicken, insbesondere mit Dicken von mehr als 50 cm, was beispielsweise in "Hausfäule- und Bauholzpilze", Huckfeldt, Schmidt, Rudolf Müller Verlag, 2005, Kapitel 11, erörtert ist. Zu den Mauerwerken, die in der üblichen Weise nicht gegen Hausschwamm behandelt werden können, gehören auch Bimsmauerwerke, Hohlblockmauerwerke oder auch Porenbetonmauerwerke, weil bei diesen keine Bohrlochtränkung möglich ist. Problematisch ist das übliche Bekämpfungsverfahren insbesondere auch bei mehrschaligen Mauerwerken, weil zumeist nicht in jede der Schalen Bohrlöcher für eine Bohrlochtränkung eingebracht werden können und nicht jede der Schalen getrocknet werden kann.

Es sind Produkte bekannt, die zur Verfestigung von Naturstein in der Restaurierung und als Bindemittel für Wandlasuren eingesetzt werden und die Lithiumwasserglas beinhalten. Diese Produkte haben zwar eine begrenzte schimmelwidrige Wirkung. Sie sind jedoch nicht zur Bekämpfung eines vitalen Hausschwammbefalls eines Mauerwerks geeignet. Vielmehr muss vor dem Einsatz derartiger Produkte eine Untergrundvorbereitung erfolgen, die eine Bekämpfung des akuten Schimmelbefalls beinhaltet.

Es sind außerdem Bautenschutzmittel bekannt, die Lithiumwasserglas in geringen Mengen enthalten. Bautenschutzmittel dieser Art wirken zwar vorbeugend gegen eine Vielzahl von Pilzarten, die auf Holz vorkommen können. Diese Bautenschutzmittel sind jedoch weder zur Bekämpfung eines vitalen Hausschwammbefalls geeignet noch zur Anwendung auf einem Mauerwerk bestimmt. Hierbei spielt eine besondere Rolle, dass die fungizide Wirkung dieser Bautenschutzmittel gegen eine Vielzahl von auf Holz auftretenden anderen Pilzarten nicht auf Serpula lacrymans (den Echten Hausschwamm) in einem Mauerwerk übertragbar ist.

Aus dem Artikel "Gegen den Hausschwamm", Illustrierte schweizerische Handwerker-Zeitung, 1885, ist es bekannt, auf Holz und Mauerwerk ein Mittel aufzutragen, das Wasserglas, Borsäure und Kochsalz beinhaltet. Die Borsäure und das Kochsalz zerstören die Sporen des Hausschwamms. Das Wasserglas überzieht das Holz und das Mauerwerk und soll einen Schutz gegen einen Neubefall bieten.

Es ist eine Aufgabe der vorliegenden Erfindung, eine Möglichkeit zur Bekämpfung eines vitalen Hausschwammbefalls eines Mauerwerks anzugeben, die vielseitig bei ganz unterschiedlichen Mauerwerksarten und insbesondere mauerwerkschonend anwendbar ist.

Die Aufgabe wird durch die Verwendung eines Stoffgemischs, das Wasserglas und Lithiumhydroxid beinhaltet, zur Bekämpfung eines vitalen Hausschwammbefalls in einem Mauerwerk gelöst.

Der Erfindung liegt die Idee zugrunde, den Durchmesser der im Mauerwerk vorhandenen Kapillaren (im Folgenden als "Kapillaren" bezeichnet) schonend derart zu verkleinern, dass sie von den Pilzgeflechten des Hausschwamms nicht mehr durchwachsen werden können. Dies wird dadurch erreicht, dass das aufzubringende Schwammsperrmittel Wasserglas, insbesondere Lithiumwasserglas, und Lithiumhydroxid beinhaltet, welches in diesen Kapillaren verkieselt und deren Durchmesser soweit reduziert, dass sie von den Hyphen nicht mehr durchwachsen werden können.

Versuche haben gezeigt, dass mit Zubereitungen, die kein Lithiumhydroxid beinhalten, diese erfinderische Idee nicht in ausreichendem Maße umsetzbar ist. Es hat sich vielmehr gezeigt, dass erst die Zugabe von Lithiumhydroxid sicherstellt, dass sich ein ausreichender Porenverschluss durch ein- oder mehrmaliges Besprühen einstellt.

Hierbei hat es sich gezeigt, dass es von besonderem Vorteil ist, wenn das Schwammsperrmittel einen Lithiumgehalt im Bereich von 0,1% - 20% (Massenprozent), insbesondere im Bereich von 0,5% - 5 % (Massenprozent), ganz insbesondere im Bereich von 1% - 2% (Massenprozent), insbesondere von 1,6 % (Massenprozent) beinhaltet. Die Verwendung von Lithiumwasserglas hat - im Gegensatz zu anderen Wasserglas-Verbindungen - den Vorteil, dass es die Kapillaren nicht vollständig verschließt, sondern lediglich deren Durchmesser reduziert. Dadurch hat die erfindungsgemäße Vorgehensweise den ganz besonderen Vorteil, dass auch Mauerwerke behandelt werden können, die mit dem bislang üblichen und anerkannten Hausschwammbekämpfungsverfahren gar nicht oder nur unzureichend behandelbar sind. Dies wird erreicht, indem dem handelsüblichen Lithiumwasserglas Lithiumhydroxid beigemischt wird. Es hat sich gezeigt, dass es von besonderem Vorteil ist, wenn das Schwammsperrmittel einen Lithiumhydroxidgehalt im Bereich von 0,5% bis 10 % oder im Bereich von 3% bis 5% beinhaltet. Besonders vorteilhaft ist es, wenn das Schwammsperrmittel Lithiumhydroxid in Form von Lithiumhydroxid-Monohydrat, insbesondere 0,5% bis 10 % oder 3% bis 5% Lithiumhydroxid-Monohydrat, beinhaltet.

Es hat sich gezeigt, dass in Abhängigkeit vom Typ des zu behandelnden Mauerwerks unterschiedliche Vorgehensweisen besonders vorteilhaft sind. Insbesondere ist es von ganz besonderem Vorteil zu unterscheiden, ob das zu behandelnde Mauerwerk oder wenigstens die befallenen Teile des Mauerwerks trockenbar sind oder nicht. Insbesondere kann unterschieden werden, ob das zu behandelnde Mauerwerk oder wenigstens die befallenen Teile des Mauerwerks mit technischen Trocknungsverfahren innerhalb eines bestimmten Zeitraumes von x bis auf einen Durchfeuchtungsgrad kleiner y trockenbar ist. Hierbei kann x insbesondere kleiner als 100 Tage, ganz insbesondere kleiner als 50 Tage und vorzugsweise insbesondere kleiner 10 Tage sein. Es hat sich gezeigt, dass eine erfolgreiche Behandlung insbesondere dann möglich ist, wenn y kleiner 10 Massenprozent, insbesondere kleiner 5 Massenprozent, ganz insbesondere kleiner 3 Massenprozent ist.

Der Durchfeuchtungsgrad bezeichnet das Verhältnis von Feuchtigkeitsgehalt zur maximalen Wasseraufnahme bei Baustoffen. Der Durchfeuchtungsgrad wird indirekt bestimmt, indem Feuchtigkeitsgehalt und die maximale Wasseraufnahme, jeweils als Massenprozent, gemessen werden. Der Durchfeuchtungsgrad ist ein übliches Maß zur Beurteilung feuchter Baustoffe, beispielsweise von Mauerwerk.

Zu den Mauerwerken, die getrocknet werden können, gehören insbesondere dünnschichtige Bruchsteinwände, Ziegelsteinwände, Bimssteinwände, Kalksteinwände usw. Zu den nicht zu trocknenden Wänden gehören insbesondere Bruchsteinwände, Feldsteinwände, Natursteinwände, Schiefersteinwände usw., wenn diese eine Dicke von mehr als 50 cm aufweisen.

Für mehrschalige Mauerwerke, die zumeist nur teilweise trockenbar sind, hat sich eine besondere Vorgehensweise als besonders vorteilhaft erwiesen, die weiter unten im Detail beschrieben ist.

Bei der Bekämpfung von Hausschwamm in einschaligen, trockenbaren Mauerwerken hat sich die nachfolgend beschriebene Vorgehensweise, die sich grundlegend von der herkömmlichen Arbeitsweise nach Stand der Technik (auch DIN 68 800 Teil 4) unterscheidet, als besonders vorteilhaft erwiesen:
Zunächst wird festgestellt, welche Teile des Mauerwerks vom Hausschwamm befallen sind. In vorteilhafter Weise kann das Feststellen der vom Hausschwamm befallenen Teile des Mauerwerks beinhalten, dass ein etwaig vorhandener Putz von dem Mauerwerk, insbesondere vollständig, entfernt wird und die freigelegte Mauerwerksoberfläche mechanisch , z. B. durch Abkehren mit einem Metallbesen, gereinigt wird. Anschließend erfolgt ein Trocknen des Mauerwerks, insbesondere wenigstens der befallenen Teile des Mauerwerks einschließlich eines die befallenen Teile umgebenen Zusatzbereichs (Sicherheitszone) des Mauerwerks, auf einen Durchfeuchtungsgrad kleiner 10% (Massenprozent), insbesondere kleiner 5% (Massenprozent), ganz insbesondere kleiner 3% (Massenprozent). Nach dem Trocknen wird, insbesondere im Sprühverfahren ein erfindungsgemäss verwendetes Schwammsperrmittel, das Lithiumwasserglas und Lithiumhydroxid beinhaltet, auf die befallenen Teile des Mauerwerks und den Zusatzbereich aufgebracht. Durch das Trocknen wird die Feuchtigkeit in dem Mauerwerk verdunstet und damit vorteilhaft die Saugfähigkeit des Mauerwerks an der Oberfläche erhöht. Dies hat zur Folge, dass das erfindungsgemäss verwendete Schwammsperrmittel tief in das Mauerwerk und insbesondere in die Fugen des Mauerwerks eindringen kann. Die damit verbundene Verkieselung führt zu einer Verdichtung an der Mauerwerkoberfläche, die sich jedoch nicht negativ hinsichtlich der bauphysikalischen Eigenschaften des Mauerwerks auswirkt. Unmittelbar nach dem Aufbringen des erfindungsgemäss verwendeten Schwammsperrmittels kann das Mauerwerk wieder verputzt werden.

Ein ganz besonderer Vorteil dieser Vorgehensweise besteht darin, dass Zug um Zug gearbeitet werden kann und dass die nach üblicher Hausschwammbekämpfungsmethode erforderliche Bohrlochtränkung nicht angewendet werden muss. Auch ist kein Auskratzen von Mörtelfugen erforderlich, wenn das Mauerwerk anschließend verputzt wird.

Durch das Verkieseln in den oberflächennahen Zonen werden die Kapillaren des Mauerwerks in den oberflächennahen Zonen soweit verschlossen, dass das Hausschwammgeflecht im Mauerwerk eingeschlossen bleibt und nicht mehr herauswachsen kann.

Die erfindungsgemässe Verwendung und das erfindungsgemäss verwendete Schwammsperrmittel haben den ganz besonderen Vorteil, dass der Hausschwamm nach der Behandlung mit dem Mauerwerk in Kontakt stehende Holzteile, wie beispielsweise Deckenbalken oder Dachbalken, nicht mehr erreichen kann. Insoweit ist es in vorteilhafter Weise nicht mehr notwendig, zwischen dem Holz und dem Mauerwerk Bitumenpappe anzubringen, was bei Anwendung herkömmlichen Bekämpfungsverfahren erforderlich ist.

Wie bereits erwähnt, ist es bei der erfindungsgemässen Verwendung des Schwammsperrmittels auch nicht erforderlich, dass die Mauerwerksfugen für eine höhere Schutzmittelaufnahme ausgekratzt werden. Vielmehr ist es so, dass die oberflächennahen Zonen der Mauerwerksfugen durch die einsetzende Verkieselung soweit geschlossen werden, dass der Hausschwamm auch aus diesem Bereich nicht mehr herauswachsen kann. Es ist allerdings auch bei der erfindungsgemässen Verwendung notwendig, das Mauerwerk über den erkennbaren Befallsbereich hinaus in einem Zusatzbereich (Sicherheitszone) von ca. 1 Meter zu behandeln. Die erfindungsgemäße Vorgehensweise hat darüber hinaus den ganz besonderen Vorteil, dass auf das Einbringen von Bohrlochreihen für eine Bohrlochtränkung vollständig verzichtet werden kann und daher die Gefahr vollständig vermieden ist, dass das Mauerwerk durch die Hausschwammbekämpfungsmaßnahmen beschädigt oder gar zerstört wird. Dies ist ein ganz besonders großer Vorteil in der Baudenkmalpflege.

Die erfindungsgemässe Verwendung und das erfindungsgemäss verwendete Schwammsperrmittel haben den ganz besonders großen Vorteil, dass nach der Behandlung eines vitalen Hausschwammbefalls automatisch ein vorbeugender Schutz gegen Wiederbefall entsteht. Selbst wenn Jahre nach einer erfindungsgemäßen Hausschwammbekämpfung ein Hausschwamm in dem Mauerwerk wieder aktiv werden sollte, bewirkt dieser vorbeugende Schutz des erfindungsgemäss verwendeten Schwammsperrmittels, dass diese Pilzgeflechte nicht mehr an die Oberfläche gelangen und somit auch keine mit dem Mauerwerk in Kontakt stehenden Hölzer erreichen können.

Der vorbeugende Effekt wirkt insbesondere auch dann, wenn es zu einer nachträglichen Durchfeuchtung des Mauerwerks kommt. Dies insbesondere dadurch, dass überschüssige, noch nicht verkieselte Anteile des Schwammsperrmittels bei einer nachträglichen Durchfeuchtung für eine zusätzliche Verkieselung zur Verfügung stehen.

Ein vorbeugender Effekt ist bei herkömmlichen Schwammsperrmitteln nicht gegeben.

In vorteilhafter Weise kann das Feststellen der vom Hausschwamm befallenen Teile des Mauerwerks beinhalten, dass ein etwaig vorhandener Putz von dem Mauerwerk, gegebenenfalls vollständig, entfernt und, die Oberfläche der Wand mechanisch gereinigt wird und/oder dass Kontrollöffnungen in das Mauerwerk eingebracht werden.

Das Trocknen kann insbesondere eine konvektive Trocknung oder eine Mikrowellentrocknung beinhalten. Es hat sich gezeigt, dass diese technischen Trocknungsmethoden zur Ausführung der erfindungsgemässen Verwendung besonders vorteilhaft sind. Insoweit werden diese Trocknungsmethoden bevorzugt. Es ist jedoch auch möglich andere Trocknungsmethoden, wie beispielsweise eine Infrarot-, Heißluft- oder Kondenstrocknung, durchzuführen, wenn mit diesen Trocknungsverfahren ausreichend schnell eine ausreichende Trocknung ein ausreichend niedriger Durchfeuchtungsgrad erreicht werden kann.

Insbesondere kann vorteilhaft vorgesehen sein, dass das Mauerwerk vor dem Aufbringen des Schwammsperrmittels, insbesondere von Staub, mechanisch gereinigt wird, beispielsweise durch intensives Abbürsten.

Bei der erfindungsgemäßen Hausschwammbekämpfung eines nicht trockenbaren Mauerwerks, insbesondere eines nicht trockenbaren Mauerwerks mit großformatigen Steinen, hat es ich bewährt, in einem ersten Schritt festzustellen, welche Teile des Mauerwerks von dem Hausschwamm befallen sind.

Danach wird die Oberfläche mechanisch gereinigt, in dem sie z. B. mit einem Metallbesen abgekehrt wird. Ein abflammen zur vollständigen Beseitigung der Hausschwammgeflechte auf der Mauerwerksoberfläche ist entgegen der DIN-üblichen Variante der Hausschwammbekämpfung nicht erforderlich.

In einem nächsten Schritt erfolgt das Aufbringen des erfindungsgemäss verwendeten Schwammsperrmittels, das Wasserglas, insbesondere Lithiumwasserglas, und Lithiumhydroxid beinhaltet, auf die Mauerfugen der befallenen Teile des Mauerwerks und auf die Mauerfugen in einem Zusatzbereich des Mauerwerks (Sicherheitszone), der die befallenen Teile umgibt, wobei das Aufbringen des Schwammsperrmittels mehrfach in mehreren zeitlich beabstandeten Aufbringschritten vorzugsweise derart erfolgt, dass jeweils neues Schwammsperrmittel aufgebracht wird, solange das unmittelbar zuvor aufgetragene Schwammsperrmittel noch feucht ist. Eine solche Vorgehensweise des mehrfachen Aufbringens des Schwammsperrmittels hat sich bewährt, um in den Mörtelfugen eine ausreichende Verkieselung zu bewirken. Hierbei wird ausgenutzt, dass der Hausschwamm bei derartigen Mauerwerken, insbesondere aus Bruch-, Feld-, oder Naturstein, ausschließlich die Mörtelfugen durchwächst, während die Steine lediglich überwachsen werden können. In erfindungsgemäßer Weise stellt sich durch die Behandlung der Mörtelfugen eine Reduktion des Durchmessers der Kapillaren ein, die verhindert, dass das Hausschwammgeflecht aus dem Mauerwerk herauswachsen kann. Da, wie erwähnt, Bruchsteine, Natursteine und auch Feldsteine vom Hausschwamm nicht durchwachsen werden, müssen diese auch nicht großflächig behandelt werden. Allerdings schadet es auch nicht, wenn das Hausschwammsperrmittel auf die Oberflächen dieser Steine des Mauerwerks aufgebracht wird.

Da kein vollständiger Verschluss der Kapillaren stattfindet, kann trotz der hergestellten Verkieselung dem Mauerwerk anschließend Feuchtigkeit entzogen werden, was von besonderem Vorteil ist. Es ist nämlich möglich, nach dem Aufbringen des Schwammsperrmittels dafür zu sorgen, dass dem Mauerwerk kontinuierlich Feuchtigkeit und damit eine Existenzgrundlage für den Hausschwamm, kontinuierlich und über Jahre hinweg entzogen werden kann. Dies kann beispielsweise dadurch erreicht werden, dass das betroffene Mauerwerk dauerhaft mit Zugluft beaufschlagt wird. Oftmals ist es möglich, durch geringe bauliche Veränderungen in einem Gebäude dafür zu sorgen, dass das behandelte Mauerwerk von Zugluft umströmt wird. Auch bei der erfindungsgemäßen Hausschwammbekämpfung von nicht trockenbaren Mauerwerken ist es vorteilhaft nicht erforderlich, eine Bohrlochtränkung durchzuführen oder die Mörtelfugen auszukratzen. Insoweit ist das erfindungsgemäße Verfahren auch bezüglich von nicht trockenbaren Mauerwerken besonders vorteilhaft in der Baudenkmalpflege anwendbar.

Bei der Bekämpfung eines vitalen Hausschwammbefalls eines zweischaligen Mauerwerks, das eine Innenschale und eine von dieser durch einen Zwischenraum (gegebenenfalls mit Bindersteinen verbundene) getrennten Außenschale aufweist, kann vorteilhaft wie folgt vorgegangen werden:
In einem ersten Schritt wird festgestellt, welche Teile des Mauerwerks vom Hausschwamm befallen sind. Dieses Feststellen kann insbesondere beinhalten, dass ein Verputz von dem Mauerwerk, insbesondere vollständig entfernt (mechanisch gereinigt) wird und/oder dass Kontrollöffnungen in das Mauerwerk eingebracht werden und/oder dass das Mauerwerk mechanisch gereinigt wird.

In einem weiteren Schritt erfolgt das Trocknen der befallenen Teile der Innenschale des Mauerwerks einschließlich eines die befallenen Teile umgebene Zusatzbereich der Innenschale (Sicherheitszone) des Mauerwerks auf einen Durchfeuchtungsgrad kleiner y% (Massenprozent). Danach wird das erfindungsgemäss verwendete Schwammsperrmittel, das Lithiumwasserglas und Lithiumhydroxid beinhaltet, insbesondere im Sprühverfahren, auf die dem Zwischenraum abgewandten Flächen der Innenschale und/oder der Außenschale aufgebracht. Vorzugsweise erfolgt ein Aufbringen des erfindungsgemäss verwendeten Schwammsperrmittels ausschließlich auf die dem Zwischenraum abgewandte Fläche der Innenschale, weil die Außenschale bei zweischaligen Mauerwerken zumeist nicht in ausreichendem Maße getrocknet werden kann.

In einem weiteren Schritt werden Durchbrüche in die Innenschale eingebracht durch die hindurch der Zwischenraum zwischen der Außenschale und der Innenschale erreichbar ist. Es genügt hierbei beispielsweise bei einem Ziegelsteinmauerwerk in aller Regel, drei Steine pro Quadratmeter Wandfläche zu entfernen.

Anschließend erfolgt ein Auftragen des erfindungsgemäss verwendeten Schwammsperrmittels auf die dem Zwischenraum zugewandten Flächen der Innenschale und der Außenschale. Dies kann beispielsweise in der Weise erfolgen, dass durch die hergestellten Durchbrüche eine Rundstrahldüse geführt wird, mittels der das erfindungsgemäss verwendete

Schwammsperrmittel im Zwischenraum versprüht wird. Hierbei ist es von besonderem Vorteil, das Auftragen des Schwammsperrmittels auf die dem Zwischenraum zugewandten Flächen der Innen- und der Außenschale in mehreren zeitlich beabstandeten Auftragsschritten zu wiederholen, wobei vorzugsweise jeweils neues Schwammsperrmittel aufgebracht wird, solange das unmittelbar zuvor aufgetragene Schwammsperrmittel noch feucht ist. Durch diese "feucht in feucht"-Arbeitsweise wird eine sehr dichte Mauerwerkoberfläche erreicht, um ein Durchwachsen/Herauswachsen des Hausschwamms zuverlässig zu verhindern. Nach dem Auftragen des Schwammsperrmittels im Zwischenraum wird die Innenwand wieder verschlossen und es kann Putz aufgetragen werden.

Auch hier ist es von besonderem Vorteil, dass es nicht erforderlich ist, eine Bohrlochtränkung durchzuführen und/oder die Mörtelfugen aufwendig auszukratzen.

Wie ausführlich geschildert, ist die erfindungsgemäße Verwendung bei der Bekämpfung eines vitalen Hausschwammbefalls eines Mauerwerks besonders vorteilhaft und führt in vorteilhafter Weise zu einem nach der Hausschwammbekämpfung wirkenden vorbeugenden Schutz gegen Wiederbefall.

Es ist von besonderem Vorteil, wenn das Schwammsperrmittel als, insbesondere sprühfähige, Flüssigkeit ausgebildet ist, weil eine Flüssigkeit besonders einfach auf das zu behandelnde Mauerwerk aufgebracht werden kann. Es hat sich gezeigt, dass eine besonders gute Wirksamkeit gegeben ist, wenn die Lithiumwasserglaszubereitung einen Lithiumgehalt im Bereich von 0,1 Massenprozent bis 20 Massenprozent, insbesondere im Bereich von 0,5 Massenprozent bis 5 Massenprozent, insbesondere im Bereich von 1,0 Massenprozent bis 2,0 Massenprozent, insbesondere von 1,6 Massenprozent beinhaltet. Dies kann beispielsweise erreicht werden, indem dem handelsüblichen Lithiumwasserglas Lithiumhydroxid beigemischt wird. Außerdem hat es sich gezeigt, dass es von besonderem Vorteil ist, wenn das Schwammsperrmittel einen Lithiumhydroxidgehalt im Bereich von 0,5% bis 10 % oder im Bereich von 3% bis 5% beinhaltet. Besonders vorteilhaft ist es, wenn das Schwammsperrmittel Lithiumhydroxid in Form von Lithiumhydroxid-Monohydrat, insbesondere 0,5% bis 10 % oder 3% bis 5% Lithiumhydroxid-Monohydrat, beinhaltet.

Das erfindungsgemäss verwendete Schwammsperrmittel kann statt Lithiumwasserglas auch ein Wasserglas eines anderen Typs, insbesondere Kaliwasserglas oder Natronwasserglas beinhalten. Insoweit kann die erfindungsgemässe Verwendung statt mit einem Schwammsperrmittel, das Lithiumwasserglas beinhaltet, auch mit einem Schwammsperrmittel, das ein anderes Wasserglas beinhaltet durchgeführt werden. Es hat sich jedoch gezeigt, dass die Verwendung von Lithiumwasserglas besonders vorteilhaft ist, weil durch Wasserglas anderen Typs als Lithiumwasserglas die bauphysikalischen Eigenschaften des Mauerwerks nachteilig beeinflusst werden, was bei Lithiumwasserglas nicht der Fall ist. Insoweit wird die Verwendung von Lithiumwasserglas anstelle von Wasserglas eines anderen Wasserglastyps bevorzugt. Die Verwendung von Lithiumhydroxid in dem Schwammsperrmittel ist unabhängig von dem Typ des verwendeten Wasserglases.

Soweit in dieser Anmeldung Prozentangaben gemacht sind, handelt es sich um Angaben in Masseprozent.

In der Zeichnung ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
- Fig. 1: ein Ausführungsbeispiel der erfindungsgemäßen Verwendung bei einem trockenbaren Mauerwerk,
- Fig. 2: ein Ausführungsbeispiel der erfindungsgemäßen Verwendung bei einem nicht trockenbaren Mauerwerk, und
- Fig. 3: ein Ausführungsbeispiel der erfindungsgemäßen Verwendung bei einem zweischaligen Mauerwerk.

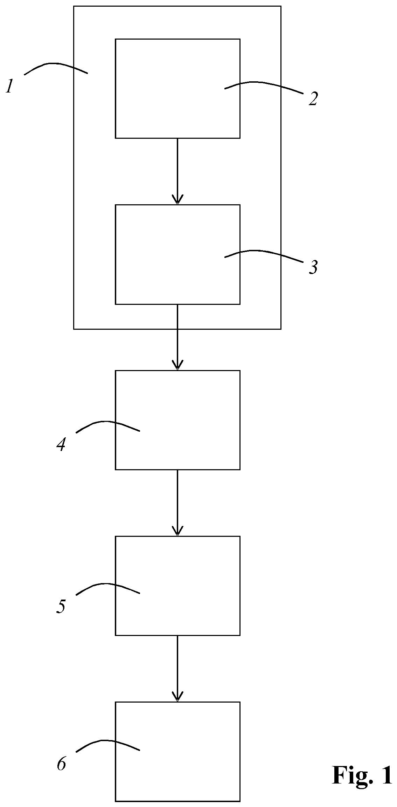

Figur 1 zeigt ein Ausführungsbeispiel der erfindungsgemäßen Verwendung bei einem trockenbaren Mauerwerk. Zunächst erfolgt ein Feststellen 1 der vom Hausschwamm befallenen Teile des Mauerwerks. Das Feststellen 1 der vom Hausschwamm befallenen Teile des Mauerwerks kann insbesondere ein Entfernen 2 eines Verputzes von dem Mauerwerk inklusive der mechanischen Reinigung der Mauerwerksoberfläche und/oder ein Einfügen 3 von Kontrollöffnungen beinhalten. Anschließend erfolgt ein Trocknen 4 der befallenen Teile des Mauerwerks einschließlich eines die befallenen Teile des umgebenen Zustandsbereichs (Sicherheitszone) des Mauerwerks auf einen Durchfeuchtungsgrad kleiner y beinhaltet, wobei y vorzugsweise 3% (Masseprozent) ist. Anschließend erfolgt ein Aufbringen 5 eines Schwammsperrmittels, das Lithiumwasserglas und Lithiumhydroxid beinhaltet auf die befallenen Teile des Mauerwerks und auf den Zusatzbereich. Das Aufbringen 5 kann vorteilhaft im Sprühverfahren erfolgen.

Anschließend erfolgt ein Verputzen 6 des behandelten Mauerwerks.

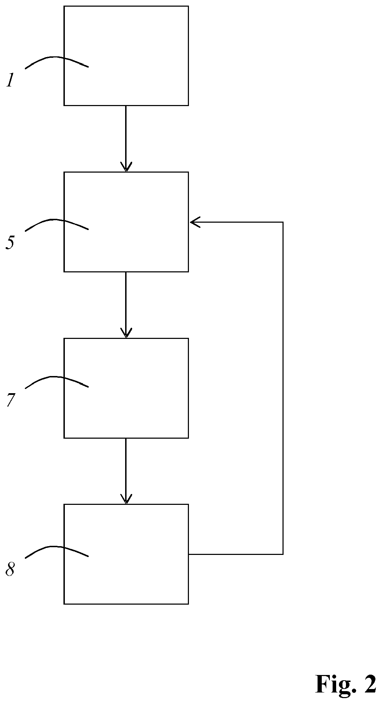

Figur 2 zeigt ein Ausführungsbeispiel der erfindungsgemäßen Verwendung bei einem nicht trockenbaren Mauerwerk.

In einem ersten Schritt erfolgt das Feststellen 1 der vom Hausschwamm befallenen Teile des Mauerwerks. Im nächsten Schritt die mechanische Reinigung der Mauerwerksoberfläche. Danach erfolgt das Aufbringen 5 des erfindungsgemäss verwendeten

Schwammsperrmittels, das Lithiumwasserglas und Lithiumhydroxid beinhaltet, auf die Mauerfugen der befallenen Teile des Mauerwerks und auf die Mauerfugen in einem Zusatzbereich von vorzugsweise einem Meter um die befallenen Teile. Das Aufbringen 5 des Schwammsperrmittels erfolgt vorzugsweise in mehreren zeitlich beabstandeten Aufbringschritten, wobei jeweils neues Schwammsperrmittel aufgebracht wird, solange das unmittelbar zuvor aufgetragene Schwammsperrmittel noch feucht ist. Nach dem Aufbringen 5 des Schwammsperrmittels erfolgt ein dauerhaftes Entziehen 7 von Feuchtigkeit aus dem Mauerwerk, beispielweise durch eine dauerhafte Beaufschlagung des Mauerwerks mit Zugluft.

Nach der Behandlung erfolgt ein Kontrollieren 8, ob weiterhin Hausschwammbefall vorhanden ist, nach einer bestimmten Zeitspanne, vorzugsweise nach einer Zeitspanne im Bereich von einem halben Jahr bis anderthalb Jahre, insbesondere innerhalb einer Zeitspanne von einem Jahr. Durch das langsame Trocknen des Mauerwerks können feine Risse zwischen Mörtel und Stein auftreten, die dann mit dem erfindungsgemäss verwendeten Schwammsperrmittel nachbehandelt werden, damit der Echte Hausschwamm nicht auswachsen kann.

Sollte bei dem Kontrollieren 8 ein noch bestehender Befall mit Hausschwamm festgestellt werden, wird der Schritt des Aufbringens 5 des Schwammsperrmittels wiederholt und vorzugsweise die Beaufschlagung des Mauerwerks mit Zugluft zum Entziehen 7 von Feuchtigkeit fortgesetzt. Vorzugsweise erfolgt dann nach einem bestimmten Zeitraum, insbesondere nach einem halben bis anderthalb Jahren, ganz insbesondere nach einem Jahr, ein erneutes Kontrollieren 8.

Sollte bei dem Kontrollieren 8 nach der 2. Behandlung ein erneutes Auswachsen von Hausschwamm festgestellt werden, wird der Schritt des Aufbringens 5 des Schwammsperrmittels (und damit der Verschluss der Kapillaren) wiederholt und vorzugsweise die Beaufschlagung des Mauerwerks mit Zugluft zum Entziehen 7 von Feuchtigkeit fortgesetzt. Vorzugsweise erfolgt dann nach einem bestimmten Zeitraum, insbesondere nach einem halben bis anderthalb Jahren, ganz insbesondere nach einem Jahr, ein erneutes Kontrollieren 8.

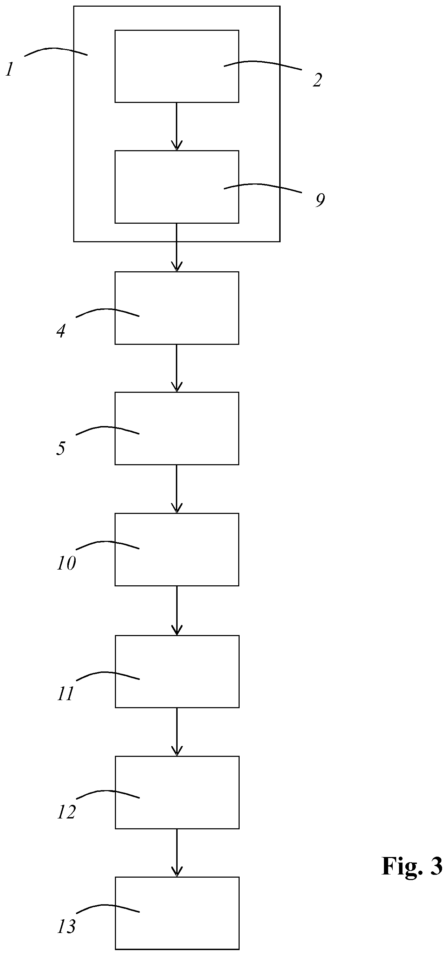

Figur 3 zeigt ein Ausführungsbeispiel der erfindungsgemäßen Verwendung zur Bekämpfung eines vitalen Hausschwammbefalls eines zweischaligen Mauerwerks mit einer Innenschale und einer von dieser durch einen Zwischenraum getrennten Außenschale vorteilhaft anwendbar ist.

In einem ersten Schritt erfolgt ein Feststellen 1, welche Teile des Mauerwerks vom Hausschwamm befallen sind. Das Feststellen 1 kann insbesondere das Entfernen 2 von Putz, insbesondere von der Innenschale, und/oder ein mechanisches Reinigen 9, insbesondere wenigstens der dem Zwischenraum abgewandten Fläche der Innenschale beinhalten.

In einem nächsten Schritt erfolgt das Einbringen 10 von Durchbrüchen in die Innenschale, um den Zwischenraum zwischen der Innenschale und der Außenschale erreichen zu können.

Danach erfolgt als nächster Schritt das Trocknen 4 der befallenen Teile der Innenschale des Mauerwerks einschließlich eines die befallenen Teile umgebenen Zusatzbereichs der Innenschale des Mauerwerks auf einen Durchfeuchtungsgrad kleiner y, wobei y vorzugsweise 3% (Masseprozent) ist.

Nach dem Trocknen 4 erfolgt ein Aufbringen 5, insbesondere im Sprühverfahren, des erfindungsgemäss verwendeten Schwammsperrmittels, das Lithiumwasserglas beinhaltet, auf die dem Zwischenraum abgewandten Flächen der Innenschale, die vom Hausschwamm betroffen sind und auf die diese Flächen umgebenden Zusatzbereiche.

Danach erfolgt ein Auftragen 11, insbesondere im Sprühverfahren und/oder mittels einer Rundsprühdüse, des erfindungsgemäss verwendeten

Schwammsperrmittels, das Lithiumwasserglas beinhaltet, auf die dem Zwischenraum zugewandten Flächen der Innenschale und der Außenschale. Das Auftragen 11 erfolgt vorzugsweise in mehreren zeitlich beabstandeten Auftragsschritten derart, dass jeweils neues Schwammsperrmittel aufgebracht wird, solange das unmittelbar zuvor aufgetragene Schwammsperrmittel noch feucht ist. Durch diese "feucht in feucht"- Methode wird eine besonders gute Durchdringung der beaufschlagten Flächen mit dem Schwammsperrmittel erreicht, damit eine vollständige Verkieselung der Oberflächen stattfindet.

Danach erfolgt das Wiederverschließen 12 der Durchbrüche in der Innenwand. Anschließend kann ein Verputzen 13 der Innenschale erfolgen.

Bei allen drei hier aufgeführten Methoden ist es notwendig, wie bei der chemischen Bekämpfung des Echten Hausschwamms nach DIN 68 800 Teil 4, dass die Feuchtequelle abgestellt wird. Das sichert die schnelle Trocknung der mit dem erfindungsgemäss verwendeten Schwammspeirmittel behandelten Wände.

### Bezugszeichenliste:

- 1: Feststellen der befallenen Teile des Mauerwerks
- 2: Entfernen von Putz
- 3: Einfügen von Kontrollöffnungen
- 4: Trocknen
- 5: Aufbringen des Schwammsperrmittels
- 6: Verputzen
- 7: Entziehen von Feuchtigkeit
- 8: Kontrollieren
- 9: Mechanisches Reinigen
- 10: Einbringen von Durchbrüchen
- 11: Auftragen
- 12: Wiederverschließen der Durchbrüche
- 13: Verputzen

## Patentansprüche

1. Verwendung eines Stoffgemischs, das Wasserglas und Lithiumhydroxid beinhaltet, zur Bekämpfung eines vitalen Hausschwammbefalls in einem Mauerwerk.

2. Verwendung nach Anspruch 1, **dadurch gekennzeichnet, dass** das Wasserglas Lithiumwasserglas ist.

3. Verwendung nach Anspruch 2, **dadurch gekennzeichnet, dass**
a. das Schwammsperrmittel einen Lithiumgehalt im Bereich von 0,1 % bis 20 % (Masseprozent), insbesondere im Bereich von 0,5% bis 5% (Masseprozent), insbesondere im Bereich von 0,5% bis 10% (Masseprozent), insbesondere im Bereich von 1,0% bis 2,0% (Masseprozent), insbesondere von 1,6 % (Masseprozent) beinhaltet, oder dass
b. das Schwammsperrmittel einen Lithiumhydroxidgehalt im Bereich von 0,5% bis 10 % (Masseprozent) oder im Bereich von 3% bis 5% (Masseprozent) beinhaltet.

4. Verwendung nach Anspruch 2 oder 3, **dadurch gekennzeichnet, dass** das Schwammsperrmittel zusätzlich ein Wasserglas eines andern Typs, insbesondere Kaliwasserglas oder Natronwasserglas, beinhaltet.

5. Verwendung nach Anspruch 1, **dadurch gekennzeichnet, dass** das Wasserglas Natriumwasserglas oder Kaliumwasserglas ist.

6. Verwendung nach einem der Ansprüche 1 bis 5, **dadurch gekennzeichnet, dass** das Schwammsperrmittel als, insbesondere sprühfähige, Flüssigkeit ausgebildet ist.

7. Verwendung nach einem der Ansprüche 1 bis 6, **dadurch gekennzeichnet, dass** das Schwammsperrmittel auf die befallenen Teile des Mauerwerks oder auf die Mörtelfugen der befallenen Teile des Mauerwerks aufgebracht wird.

8. Verwendung nach einem der Ansprüche 1 bis 7, **dadurch gekennzeichnet, dass**
a. festgestellt wird, ob das Mauerwerk trockenbar ist oder wenigstens die befallenen Teile des Mauerwerks trockenbar sind, oder dass
b. festgestellt wird, ob das Mauerwerk oder wenigstens die befallenen Teile des Mauerwerks, insbesondere mit technischen Trocknungsverfahren, innerhalb eines bestimmten Zeitraumes von x bis auf einen Durchfeuchtungsgrad kleiner y trockenbar ist, wobei x kleiner als 100 Tage, insbesondere kleiner als 50 Tage, insbesondere kleiner als 10 Tage ist und wobei y kleiner 10 Massenprozent, insbesondere kleiner 5 Massenprozent, insbesondere kleiner 3 Massenprozent ist.

9. Verwendung nach Anspruch 8 zur Bekämpfung eines vitalen Hausschwammbefalls eines trockenbaren Mauerwerks, **gekennzeichnet durch** folgende Schritte:
a. Feststellen der vom Hausschwamm befallenen Teile des Mauerwerks,
b. Trocknen der befallenen Teile des Mauerwerks einschließlich eines die befallenen Teile umgebenden Zusatzbereichs des Mauerwerks auf einen Durchfeuchtungsgrad kleinery,
c. Aufbringen, insbesondere im Sprühverfahren, des Schwammsperrmittels auf die befallenen Teile des Mauerwerks und auf den Zusatzbereich.

10. Verwendung nach Anspruch 9, **dadurch gekennzeichnet, dass**
a. das Feststellen der vom Hausschwamm befallenen Teile des Mauerwerks beinhaltet, dass ein Verputz von dem Mauerwerk, insbesondere vollständig, entfernt wird und/oder das Mauerwerk mechanisch gereinigt wird und/oder dass Kontrollöffnungen in das Mauerwerk eingebracht werden Und/oder dass
b. das Trocknen eine konvektive Trocknung oder eine Mikrowellentrocknung oder eine thermische Trocknung oder eine Infrarottrocknung oder eine Kondenstrocknung umfasst und/oder dass
c. das Mauerwerk vor dem Aufbringen des Schwammsperrmittels mechanisch gereinigt wird und/oder dass
d. das Mauerwerk nach dem Aufbringen des Schwammsperrmittels verputzt wird.

11. Verwendung nach einem der Ansprüche 1 bis 10, zur Bekämpfung eines vitalen Hausschwammbefalls eines nicht trockenbaren Mauerwerks, **gekennzeichnet durch** folgende Schritte:
a. Feststellen der vom Hausschwamm befallenen Teile des Mauerwerks, oder Feststellen der vom Hausschwamm befallenen Teile des Mauerwerks, wobei das Feststellen der vom Hausschwamm befallenen Teile des Mauerwerks beinhaltet, dass ein Verputz von dem Mauerwerk, insbesondere vollständig, entfernt wird und/oder das Mauerwerk mechanisch gereinigt wird, und
b. Aufbringen des Schwammsperrmittels auf die Mauerfugen der befallenen Teile des Mauerwerks und auf die Mauerfugen in einem Zusatzbereich um die befallenen Teile.

12. Verwendung nach Anspruch 11, **dadurch gekennzeichnet, dass**
a. das Aufbringen des Schwammsperrmittels in mehreren zeitlich beabstandeten Aufbringschritten erfolgt, oder dass
b. das Aufbringen des Schwammsperrmittels in mehreren zeitlich beabstandeten Aufbringschritten erfolgt, wobei jeweils neues Schwammsperrmittel aufgebracht wird, solange das unmittelbar zuvor aufgetragene Schwammsperrmittel noch feucht ist, oder dass
c. das Aufbringen des Schwammsperrmittels in mehreren zeitlich beabstandeten Aufbringschritten und ein dauerhaftes Entziehen von Feuchtigkeit aus dem Mauerwerk erfolgt, oder dass
d. das Aufbringen des Schwammsperrmittels in mehreren zeitlich beabstandeten Aufbringschritten und ein dauerhaftes Entziehen von Feuchtigkeit aus dem Mauerwerk erfolgt, wobei das Entziehen das Herstellen einer dauerhaften Beaufschlagung des Mauerwerks mit Zugluft beinhaltet.

13. Verwendung nach einem der Ansprüche 8 bis 10 zur Bekämpfung eines vitalen Hausschwammbefalls eines zweischaligen Mauerwerks mit einer Innenschale und einer von dieser durch einen Zwischenraum getrennten Außenschale, **gekennzeichnet durch** folgende Schritte:
a. Feststellen der vom Hausschwamm befallenen Teile des Mauerwerks,
b. Trocknen der befallenen Teile der Innenschale des Mauerwerks einschließlich eines die befallenen Teile umgebenden Zusatzbereichs der Innenschale des Mauerwerks auf einen Durchfeuchtungsgrad kleiner y Massenprozent,
c. Aufbringen, insbesondere im Sprühverfahren des Schwammsperrmittels auf die dem Zwischenraum abgewandten Flächen der Innenschale und/oder der Außenschale,
d. Einbringen von Durchbrüchen in die Innenschale,
e. Auftragen, insbesondere im Sprühverfahren und/oder mit einer Rundsprühdüse, des Schwammsperrmittels auf die dem Zwischenraum zugewandten Flächen der Innenschale und der Außenschale, und
f. Wiederverschließen der Durchbrüche.

14. Verwendung nach Anspruch 13, **dadurch gekennzeichnet, dass**
a. das Auftragen auf die dem Zwischenraum zugewandten Flächen der Innenschale und der Außenschale in mehreren zeitlich beabstandeten Auftragsschritten erfolgt, oder dass
b. das Auftragen auf die dem Zwischenraum zugewandten Flächen der Innenschale und der Außenschale in mehreren zeitlich beabstandeten Auftragsschritten erfolgt, wobei jeweils neues Schwammsperrmittel aufgebracht wird, solange das unmittelbar zuvor aufgetragene Schwammsperrmittel noch feucht ist.

15. Verwendung nach einem der Ansprüche 9 bis 14, **dadurch gekennzeichnet, dass**
a. die im Umkreis von einem Meter um die befallenen Teile des Mauerwerks liegenden Teile des Mauerwerks den Zusatzbereich bilden, und/oder dass
b. keine Bohrlochtränkung erfolgt und/oder dass kein Auskratzen von Mörtelfugen erfolgt.

## Claims

1. Use of a mixture comprising water glass and lithium hydroxide for combatting live dry rot in a masonry construction.

2. Use according to Claim 1, **characterized in that** the water glass is lithium water glass.

3. Use according to Claim 2, **characterized in that**
a. the rot barrier composition has a lithium content in the range from 0.1% to 20% (percent by mass), in particular in the range from 0.5% to 5% (percent by mass), in particular in the range from 0.5% to 10% (percent by mass), in particular in the range from 1.0% to 2.0% (percent by mass), in particular 1.6% (percent by mass), or **in that**
b. the rot barrier composition has a lithium hydroxide content in the range from 0.5% to 10% (percent by mass) or in the range from 3% to 5% (percent by mass).

4. Use according to Claim 2 or 3, **characterized in that** the rot barrier composition additionally comprises a water glass of a different type, in particular potassium water glass or sodium water glass.

5. Use according to Claim 1, **characterized in that** the water glass is sodium water glass or potassium water glass.

6. Use according to any of Claims 1 to 5, **characterized in that** the rot barrier composition is in the form of liquid, in particular sprayable liquid.

7. Use according to any of Claims 1 to 6, **characterized in that** the rot barrier composition is applied to the affected parts of the masonry construction or to the mortar joins of the affected parts of the masonry construction.

8. Use according to any of Claims 1 to 7, **characterized in that**
a. it is established whether the masonry construction is able to be dried or at least the affected parts of the masonry construction are able to be dried, or **in that**
b. it is established whether the masonry construction or at least the affected parts of the masonry construction are able to be dried, in particular by means of industrial drying methods, within a particular period of time of x down to a degree of moisture penetration of less than y, where x is less than 100 days, in particular less than 50 days, in particular less than 10 days, and y is less than 10% by mass, in particular less than 5% by mass, in particular less than 3% by mass.

9. Use according to Claim 8 for combatting live dry rot in a dryable masonry construction, **characterized by** the following steps:
a. determination of the parts of the masonry construction affected by the dry rot,
b. drying of the affected parts of the masonry construction including an additional region of the masonry construction surrounding the affected parts to a degree of moisture penetration of less than y,
c. application, in particular by spraying, of the rot barrier composition to the affected parts of the masonry construction and to the additional region.

10. Use according to Claim 9, **characterized in that**
a. the determination of the parts of the masonry construction affected by dry rot comprises removing a plaster or render from the masonry construction, in particular completely, and/or mechanically cleaning the masonry construction and/or introducing monitoring openings into the masonry construction and/or **in that**
b. the drying comprises convective drying or microwave drying or thermal drying or infrared drying or condensation drying and/or **in that**
c. the masonry construction is mechanically cleaned before application of the rot barrier composition and/or **in that**
d. the masonry construction is plastered or rendered after application of the rot barrier composition.

11. Use according to any of Claims 1 to 10 for combatting live dry rot in a masonry construction which is not able to be dried, **characterized by** the following steps:
a. determination of the parts of the masonry construction affected by dry rot, or determination of the parts of the masonry construction affected by dry rot, where the determination of the parts of the masonry construction affected by dry rot comprises removing a plaster or render from the masonry construction, in particular completely, and/or mechanically cleaning the masonry construction and
b. application of the rot barrier composition to the masonry joins of the affected parts of the masonry construction and to the masonry joins in an additional region around the affected parts.

12. Use according to Claim 11, **characterized in that**
a. the application of the rot barrier composition is carried out in a plurality of application steps at time intervals, or **in that**
b. the application of the rot barrier composition is carried out in a plurality of application steps at time intervals, with in each case fresh rot barrier composition being applied as long as the directly previously applied rot barrier composition is still moist, or **in that**
c. the application of the rot barrier composition is carried out in a plurality of application steps at time intervals and continual withdrawal of moisture from the masonry construction is carried out, or **in that**
d. the application of the rot barrier composition is carried out in a plurality of application steps at time intervals and continual withdrawal of moisture from the masonry construction is carried out, where the withdrawal comprises establishment of continual treatment of the masonry construction with an air draught.

13. Use according to any of Claims 8 to 10 for combatting live dry rot in a double masonry wall having an inner shell and an outer shell separated from the inner shell by an intermediate space, **characterized by** the following steps:
a. determination of the parts of the masonry wall affected by dry rot,
b. drying of the affected parts of the inner shell of the masonry wall including an additional region of the inner shell of the masonry wall surrounding the affected parts to a degree of moisture penetration of less than y percent by mass,
c. application, in particular by spraying, of the rot barrier composition to the surfaces of the inner shell and/or the outer shell facing away from the intermediate space,
d. introduction of openings into the inner shell,
e. application, in particular by spraying and/or using a round spray nozzle, of the rot barrier composition to the surfaces of the inner shell and the outer shell facing the intermediate space, and
f. reclosing of the openings.

14. Use according to Claim 13, **characterized in that**
a. the application to the surfaces of the inner shell and the outer shell facing the intermediate space is carried out in a plurality of application steps at time intervals, or **in that**
b. the application to the surfaces of the inner shell and the outer shell facing the intermediate space is carried out in a plurality of application steps at time intervals, with in each case fresh rot barrier composition being applied as long as the directly previously applied rot barrier composition is still moist.

15. Use according to any of Claims 9 to 14, **characterized in that**
a. the parts of the masonry construction located within a circle one metre around the affected parts of the masonry construction form the additional region, and/or **in that**
b. no drilled hole impregnation is carried out and/or **in that** no scratching-out of mortar joins is carried out.

## Revendications

1. Utilisation d'un mélange de matières, qui contient du verre soluble et de l'hydroxyde de lithium, pour lutter contre une infestation par de la mérule vivante dans une maçonnerie.

2. Utilisation selon la revendication 1, **caractérisée en ce que** le verre soluble est du verre soluble de lithium.

3. Utilisation selon la revendication 2, **caractérisée en ce que**
a. l'agent de blocage de la mérule contient une teneur en lithium dans la plage allant de 0,1 % à 20 % (pourcentage en masse), notamment dans la plage allant de 0,5 % à 5 % (pourcentage en masse), notamment dans la plage allant de 0,5 % à 10 % (pourcentage en masse), notamment dans la plage allant de 1,0 % à 2,0 % (pourcentage en masse), notamment de 1,6 % (pourcentage en masse), ou **en ce que**
b. l'agent de blocage de la mérule contient une teneur en hydroxyde de lithium dans la plage allant de 0,5 % à 10 % (pourcentage en masse) ou dans la plage allant de 3 % à 5 % (pourcentage en masse).

4. Utilisation selon la revendication 2 ou 3, **caractérisée en ce que** l'agent de blocage de la mérule contient en outre un verre soluble d'un autre type, notamment du verre soluble potassique ou du verre soluble sodique.

5. Utilisation selon la revendication 1, **caractérisée en ce que** le verre soluble est du verre soluble de sodium ou du verre soluble de potassium.

6. Utilisation selon l'une quelconque des revendications 1 à 5, **caractérisée en ce que** l'agent de blocage de la mérule est configuré sous la forme d'un liquide, notamment pulvérisable.

7. Utilisation selon l'une quelconque des revendications 1 à 6, **caractérisée en ce que** l'agent de blocage de la mérule est appliqué sur les parties infestées de la maçonnerie ou sur les joints de mortier des parties infestées de la maçonnerie.

8. Utilisation selon l'une quelconque des revendications 1 à 7, **caractérisée en ce que**
a. il est déterminé si la maçonnerie peut être séchée ou si au moins les parties infestées de la maçonnerie peuvent être séchées, ou **en ce que**
b. il est déterminé si la maçonnerie ou au moins les parties infestées de la maçonnerie, peuvent être séchées, notamment avec des procédés de séchage techniques, en une période de temps déterminée de x jusqu'à un degré d'humidité inférieur à y, x étant inférieur à 100 jours, notamment inférieur à 50 jours, notamment inférieur à 10 jours, et y étant inférieur à 10 pour cent en masse, notamment inférieur à 5 pour cent en masse, notamment inférieur à 3 pour cent en masse.

9. Utilisation selon la revendication 8 pour lutter contre une infestation par de la mérule vivante d'une maçonnerie pouvant être séchée, **caractérisée par** les étapes suivantes :
a. la détermination des parties infestées par de la mérule de la maçonnerie,
b. le séchage des parties infestées de la maçonnerie, y compris d'une zone supplémentaire entourant les parties infestées de la maçonnerie à un degré d'humidité inférieur à y,
c. l'application, notamment par un procédé de pulvérisation, de l'agent de blocage de la mérule sur les parties infestées de la maçonnerie et sur la zone supplémentaire.

10. Utilisation selon la revendication 9, **caractérisée en ce que**
a. la détermination des parties infestées par de la mérule de la maçonnerie comprend l'élimination, notamment totale, d'un enduit de la maçonnerie, et/ou le nettoyage mécanique de la maçonnerie et/ou la réalisation d'ouvertures de contrôle dans la maçonnerie, et/ou **en ce que**
b. le séchage comprend un séchage convectif ou un séchage par micro-ondes ou un séchage thermique ou un séchage infrarouge ou un séchage par condensation, et/ou **en ce que**
c. la maçonnerie est nettoyée mécaniquement avant l'application de l'agent de blocage de la mérule, et/ou **en ce que**
d. la maçonnerie est enduite après l'application de l'agent de blocage de la mérule.

11. Utilisation selon l'une quelconque des revendications 1 à 10, pour lutter contre une infestation par de la mérule vivante d'une maçonnerie ne pouvant pas être séchée, **caractérisée par** les étapes suivantes :
a. la détermination des parties infestées par de la mérule de la maçonnerie, ou la détermination des parties infestées par de la mérule de la maçonnerie, laquelle détermination des parties infestées par de la mérule de la maçonnerie comprenant l'élimination, notamment totale, d'un enduit de la maçonnerie, et/ou le nettoyage mécanique de la maçonnerie, et
b. l'application de l'agent de blocage de la mérule sur les joints de maçonnerie des parties infestées de la maçonnerie et sur les joints de maçonnerie dans une zone supplémentaire autour des parties infestées.

12. Utilisation selon la revendication 11, **caractérisée en ce que**
a. l'application de l'agent de blocage de la mérule a lieu en plusieurs étapes d'application espacées dans le temps, ou **en ce que**
b. l'application de l'agent de blocage de la mérule a lieu en plusieurs étapes d'application espacées dans le temps, du nouvel agent de blocage de la mérule étant appliqué à chaque fois pendant que l'agent de blocage de la mérule appliqué immédiatement auparavant est encore humide, ou **en ce que**
c. l'application de l'agent de blocage de la mérule a lieu en plusieurs étapes d'application espacées dans le temps et une extraction durable d'humidité de la maçonnerie a lieu, ou **en ce que**
d. l'application de l'agent de blocage de la mérule a lieu en plusieurs étapes d'application espacées dans le temps et une extraction durable d'humidité de la maçonnerie a lieu, l'extraction comprenant l'établissement d'une exposition durable de la maçonnerie à un courant d'air.

13. Utilisation selon l'une quelconque des revendications 8 à 10 pour lutter contre une infestation par de la mérule vivante d'une maçonnerie à double enveloppe comprenant une enveloppe intérieure et une enveloppe extérieure séparée de celle-ci par un espace intermédiaire, **caractérisée par** les étapes suivantes :
a. la détermination des parties infestées par de la mérule de la maçonnerie ;
b. le séchage des parties infestées de l'enveloppe intérieure de la maçonnerie, y compris d'une zone supplémentaire entourant les parties infestées de l'enveloppe intérieure de la maçonnerie à un degré d'humidité inférieur à y pour cent en masse,
c. l'application, notamment par un procédé de pulvérisation, de l'agent de blocage de la mérule sur les surfaces détournées de l'espace intermédiaire de l'enveloppe intérieure et/ou de l'enveloppe extérieure,
d. la réalisation de percées dans l'enveloppe intérieure,
e. l'application, notamment par un procédé de pulvérisation et/ou avec une buse de pulvérisation ronde, de l'agent de blocage de la mérule sur les surfaces tournées vers l'espace intermédiaire de l'enveloppe intérieure et de l'enveloppe extérieure, et
f. la fermeture des percées.

14. Utilisation selon la revendication 13, **caractérisée en ce que**
a. l'application sur les surfaces tournées vers l'espace intermédiaire de l'enveloppe intérieure et de l'enveloppe extérieure a lieu en plusieurs étapes d'application espacées dans le temps, ou **en ce que**
b. l'application sur les surfaces tournées vers l'espace intermédiaire de l'enveloppe intérieure et de l'enveloppe extérieure a lieu en plusieurs étapes d'application espacées dans le temps, du nouvel agent de blocage de la mérule étant appliqué à chaque fois pendant que l'agent de blocage de la mérule appliqué immédiatement auparavant est encore humide.

15. Utilisation selon l'une quelconque des revendications 9 à 14, **caractérisée en ce que**
a. les parties de la maçonnerie situées dans un rayon d'un mètre autour des parties infestées de la maçonnerie forment la zone supplémentaire, et/ou **en ce que**
b. aucune imprégnation de trou de perçage n'a lieu et/ou **en ce qu'**aucun grattage de joints de mortier n'a lieu.
